(19) Europäisches Patentamt
European Patent Office
Office européen des brevets

(11) **EP 4 628 867 A1**

(12) **EUROPEAN PATENT APPLICATION**
published in accordance with Art. 153(4) EPC

(43) Date of publication:
**08.10.2025 Bulletin 2025/41**

(21) Application number: **24774933.6**

(22) Date of filing: **19.03.2024**

(51) International Patent Classification (IPC):
*G01M 13/04* [(2019.01)]    *F16C 19/06* [(2006.01)]
*F16C 19/10* [(2006.01)]    *F16C 19/52* [(2006.01)]

(52) Cooperative Patent Classification (CPC):
**F16C 19/06; F16C 19/10; F16C 19/52; G01M 13/04**

(86) International application number:
**PCT/JP2024/010822**

(87) International publication number:
**WO 2024/195799 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2023 JP 2023045768**

(71) Applicant: **NSK LTD.**
**Tokyo 141-8560 (JP)**

(72) Inventors:
• **HASHIMOTO Sho**
**Fujisawa-shi, Kanagawa 251-8501 (JP)**
• **KOMATA Hiroki**
**Fujisawa-shi, Kanagawa 251-8501 (JP)**

(74) Representative: **Grünecker Patent- und
Rechtsanwälte
PartG mbB
Leopoldstraße 4
80802 München (DE)**

(54) **METHOD FOR PREDICTING LIFE OF ROLLING BEARING, AND METHOD FOR PREDICTING WEIBULL DISTRIBUTION OF LIFE OF ROLLING BEARING**

(57)    There is provided a method for predicting a life of a rolling bearing when the rolling bearing is used under an arbitrary load condition, in which a stress intensity factor range $\Delta K_{II}$ associated with passage of a rolling element under the load condition is calculated based on a size $\sqrt{area}$ of inclusions existing in the vicinity of a rolling contact surface of the rolling bearing; and an inclusion-originated flaking life of the rolling bearing is predicted from the stress intensity factor range $\Delta K_{II}$.

**Fig.1**

**EP 4 628 867 A1**

## Description

### Technical Field

The present disclosure relates to a method for predicting a life of a rolling bearing and a method for predicting a Weibull distribution of a life of a rolling bearing using the same.

### Background Art

Flaking in a rolling bearing is generally classified into subsurface originated flaking and surface originated flaking. Surface originated flaking may occur originating from indentations formed by foreign matter that has entered the bearing or may occur originating from microcracks referred to as peeling that occur when oil film formation is insufficient. Meanwhile, subsurface originated flaking is a phenomenon that occurs when the lubrication state is good, and is fatigue fracture caused by cyclic shearing stress acting inside the material. Namely, subsurface originated flaking is the inherent fatigue life of the material of the rolling bearing. The dynamic load rating of a rolling bearing is determined from the viewpoint of the magnitude of shearing stress that the rolling bearing can withstand for the number of cycles serving as a reference.

A basic rating life $L_{10}$ [$10^6$ rev.] used as a general method for calculating the life until flaking occurs in a rolling bearing is calculated using the following Equation (1) based on the Lundberg-Palmgren life theory.

$$L_{10} = (C/P)^p \ \dots \ (1)$$

Here, C is the basic dynamic load rating, and P is the dynamic equivalent load acting on the rolling bearing. In addition, p is the load exponent, which is 3 for ball bearings and 10/3 for roller bearings. The basic rating life $L_{10}$ is the life at which the cumulative failure probability is 10% (the reliability is 90%).

In addition, a life formula that takes into account the lubrication state of a bearing has been standardized (ISO/TS16281). An adjusted rating life $L_{nm}$ when the failure probability is n% (namely, the reliability is (100 - n)%) is expressed by the following Equation (2).

$$L_{nm} = a_1 \cdot a_{ISO} \cdot L_{10} \ \dots \ (2)$$

Here, $a_1$ is the reliability factor, which is 1 when n = 10 (the reliability is 90%), and decreases as the value of n decreases. In addition, $a_{ISO}$ is a factor determined by the operating conditions, and includes lubrication conditions, load conditions, lubricant contamination level, and the like as variables.

In addition, for example, Patent Literature 1 describes a method for predicting a life of indentation-originated flaking in a bearing. Here, the height of the rise is estimated from the size of the indentation, and the life decrease rate is calculated from the height of the rise of the indentation.

### Citation List

### Patent Literature

Patent Literature 1: Japanese Patent No. 5908356

### Summary of Invention

### Technical Problem

Here, subsurface originated flaking, which is the inherent fatigue life of the material of a rolling bearing is known to occur when cracks occur and propagate originating from non-metallic inclusions contained in the material of the rolling bearing. However, both the rolling bearing life formulas described above do not take into account the influence of non-metallic inclusions that are an important factor influencing life, and are not life formulas that take into account the influence of material cleanliness. Therefore, the life formulas are insufficient in terms of predicting the life of the rolling bearing with high accuracy.

Therefore, the present disclosure describes a method for predicting a life of a rolling bearing, which is capable of predicting the life of the rolling bearing with high accuracy, and a method for predicting a Weibull distribution of a life of a rolling bearing using the same.

## Solution to Problem

A method for predicting a life of a rolling bearing according to one aspect of the present disclosure is [1] "a method for predicting a life of a rolling bearing when the rolling bearing is used under an arbitrary load condition, in which a stress intensity factor range $\Delta K_{II}$ associated with passage of a rolling element under the load condition is calculated based on a size $\sqrt{area}$ of inclusions existing in the vicinity of a rolling contact surface of the rolling bearing, and an inclusion-originated flaking life of the rolling bearing is predicted from the stress intensity factor range $\Delta K_{II}$".

In the life prediction method, the inclusion-originated flaking life of the rolling bearing is predicted from the stress intensity factor range $\Delta K_{II}$. The stress intensity factor range $\Delta K_{II}$ is calculated taking into account the size $\sqrt{area}$ of the inclusions in addition to shearing stress. Namely, by using the stress intensity factor range $\Delta K_{II}$, the inclusion-originated flaking life of the rolling bearing can be predicted taking into account the influence of inclusions. In this manner, in the life prediction method, the life of the rolling bearing can be predicted with high accuracy.

A method for predicting a life of a rolling bearing according to one aspect of the present disclosure may be [2] "the method for predicting a life of a rolling bearing according to [1] above, in which a value of a maximum size $\sqrt{area}_{max}$ of the inclusions existing in the vicinities of the rolling contact surfaces of an arbitrary number x of rolling bearings is applied as the size $\sqrt{area}$, and a minimum life $L_{(100/x)}$ for the x rolling bearings is predicted from the stress intensity factor range $\Delta K_{II}$ obtained based on the maximum size $\sqrt{area}_{max}$". In this manner, in the life prediction method, the minimum life $L_{(100/x)}$ for the arbitrary number x of rolling bearings can be predicted by using the maximum size $\sqrt{area}_{max}$ of the inclusions.

A method for predicting a life of a rolling bearing according to one aspect of the present disclosure may be [3] "the method for predicting a life of a rolling bearing according to [2] above, in which the maximum size $\sqrt{area}_{max}$ is estimated using an extreme value statistical distribution of inclusions in steel from which the rolling bearings are manufactured, and is the maximum size of the inclusions existing in a total stress volume of the x rolling bearings". In this case, in the life prediction method, the maximum size $\sqrt{area}_{max}$ of the inclusions existing in the vicinities of the rolling contact surfaces of the arbitrary number x of rolling bearings can be more appropriately estimated by using the extreme value statistical distribution.

A method for predicting a Weibull distribution of a life of a rolling bearing according to another aspect of the present disclosure is [4] "a method for predicting a Weibull distribution of a life of a rolling bearing, in which a Weibull distribution of the life of the rolling bearing is predicted by multiplying the minimum life $L_{(100/x)}$ predicted by the method for predicting a life of a rolling bearing according to [2] or [3] above by a ratio of a reliability factor $a_1$ at a cumulative failure probability (100/x)% to the reliability factor $a_1$ at an arbitrary cumulative failure probability".

In the Weibull distribution prediction method, the Weibull distribution of the life of the rolling bearing can be predicted from the minimum life $L_{(100/x)}$ predicted in [2] or [3] above by using the ratio of the reliability factor $a_1$ at the cumulative failure probability (100/x)% to the reliability factor $a_1$ at the arbitrary cumulative failure probability. Incidentally, as described above, in [2] or [3] above, the life is predicted taking into account the size (maximum size) of the inclusions. Accordingly, in the Weibull distribution prediction method, a more accurate Weibull distribution of the life of the rolling bearing can be obtained.

## Advantageous Effects of Invention

According to various aspects of the present disclosure, the life of the rolling bearing can be predicted with high accuracy.

## Brief Description of Drawings

[FIG. 1] FIG. 1 is a diagram showing the relationship between flaking life and a stress intensity factor range $\Delta K_{II}$.
[FIG. 2] FIG. 2 is a diagram showing a hypothetical inclusion distribution.
[FIG. 3] FIG. 3 is a diagram showing a Weibull distribution of predicted life.

## Description of Embodiments

Hereinafter, an embodiment of a method for predicting a life of a rolling bearing in a case where the rolling bearing is used under an arbitrary load condition in the present disclosure will be described. When two bodies repeatedly come into contact with each other under a load as in a rolling element and a bearing ring of a rolling bearing, the concentration of stress occurs around non-metallic inclusions contained in the bearing material. Then, cracks occur originating from the inclusions, and the cracks propagate and lead to flaking. Flaking originating from inclusions (subsurface originated flaking) occurs when the cleanliness of lubricating oil is high and oil film formation is sufficient. The flaking is a fatigue fracture phenomenon caused by shear (mode II) crack propagation. Therefore, in order to quantify the influence of inclusions on flaking, and perform highly accurate life prediction, it is effective to treat the inclusions as microcracks and apply fracture mechanics.

Meanwhile, in the case of flaking originating from inclusions, the inclusions serving as the origin of the flaking often disappear along with flaked pieces. For this reason, it is extremely difficult to evaluate the sizes of the inclusions after the occurrence of flaking. Therefore, it has been found that the influence of the sizes of defects (namely, the sizes of the inclusions) can be quantitatively evaluated by providing micro-sized drill holes simulating the inclusions in the bearing ring of the rolling bearing.

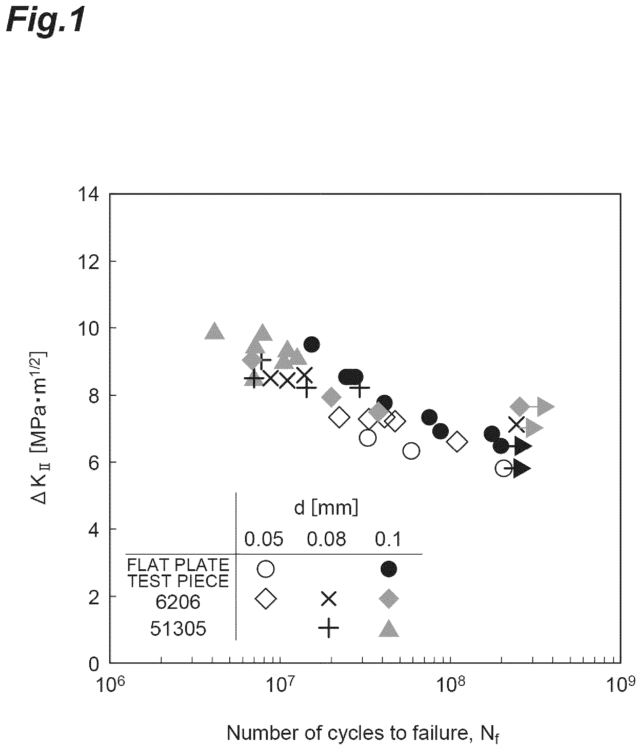

FIG. 1 shows the results of life tests using a single-row deep groove ball bearing 6206, a single-direction thrust ball bearing 51305, and a flat plate test piece (all made of SUJ2). Drill holes of $\varphi 50$ to $\varphi 100$ $\mu$m are provided in the rolling contact surfaces of the bearing rings of the bearings and the flat plate test piece. As for the load, various loads are applied such that the maximum contact surface pressure is 2.4 to 3.6 GPa. In the life tests, since a fatigue crack occurs and propagates from a drill hole edge, a mode II stress intensity factor $K_{II}$ of the front edge of a microcrack that has occurred from the drill hole edge can be calculated by using FEM or the like.

Then, the mode II stress intensity factor range $\Delta K_{II}$ is obtained by calculating a change in $K_{II}$ when the rolling element passes over the drill hole. Incidentally, as one example, the stress intensity factor range $\Delta K_{II}$ [MPa·m$^{1/2}$] for an arbitrary defect size $\varphi d$ [m] can be approximately obtained by using the following Equation (3).
[Equation 1]

$$\Delta K_{II} = (-1560 \cdot d + 0.82) \cdot \frac{8}{(2-v)\pi} \tau \sqrt{\frac{\pi d}{2}} \quad \cdots \quad (3)$$

Here, the square root of the area of the drill hole projected in a direction perpendicular to a rolling direction is denoted as $\sqrt{area}$. $\sqrt{area}$ is expressed by the following Equation (4).
[Equation 2]

$$\sqrt{area} = \sqrt{\frac{\pi d^2}{4}} \quad \cdots \quad (4)$$

The stress intensity factor range $\Delta K_{II}$ for an arbitrary defect having a size $\sqrt{area}$ and including an inclusion can be calculated by using the above Equation (3) and Equation (4). Incidentally, as described above, the drill hole simulates an inclusion. For this reason, the $\sqrt{area}$ of the drill hole can be used as the size of the inclusion.

FIG. 1 summarizes the correlation between the calculated stress intensity factor range $\Delta K_{II}$ under each test condition using the above-mentioned method and the number of stress cycles (namely, life) leading to flaking. It can be seen from FIG. 1 that the life of the rolling bearing correlates closely with the stress intensity factor range $\Delta K_{II}$. Incidentally, the above-described contents are described in detail in the following literatures.

- Hashimoto et al., Influence of Micro-defect Size on Flaking Strength of Rolling Bearings (Part 1), Transactions of the Japan Society of Mechanical Engineers, Vol. 83, No. 852, 2017
- Hashimoto et al., Influence of Micro-defect Size on Flaking Strength of Rolling Bearings (Part 2), Transactions of the Japan Society of Mechanical Engineers, Vol. 83, No. 852, 2017

In this manner, in the method for predicting a life of a rolling bearing according to the present embodiment, the stress intensity factor range $\Delta K_{II}$ associated with the passage of the rolling element under an arbitrary load condition can be calculated based on the size $\sqrt{area}$ of the inclusions. Incidentally, here, the inclusion refers to an inclusion existing in the vicinity of the rolling contact surface of the rolling bearing. In addition, the "vicinity of the rolling contact surface" may refer to a region around the rolling contact surface in which the inclusion becomes a cause of flaking due to the action of stress. The "vicinity of the rolling contact surface" may be a predetermined range from the rolling contact surface set in advance based on conditions such as whether the inclusion becomes an origin of flaking.

Here, the theory on which the ISO life formula for rolling bearings is based is expressed by the following Equation (5).
[Equation 3]

$$ln\frac{1}{S} \approx \frac{N^e[\tau - \tau_u]^c V}{z_0^h} \quad \cdots \quad (5)$$

In the above Equation (5), S is the survival probability (1 - failure probability), N is the number of stress cycles, $\tau$ is the shearing stress, $\tau_u$ is the fatigue limit, V is the stress volume, $z_0$ is the maximum shearing stress depth, and each of e, c, and h is a constant.

From the inventors' research to date, it has been found that the life of the rolling bearing correlates more closely with the stress intensity factor range $\Delta K_{II}$ than with the shearing stress $\tau$. The size of the inclusions affects the life of the rolling bearing. As is clear from the above Equation (3), the stress intensity factor range $\Delta K_{II}$ includes the size $\sqrt{area}$ of the inclusions as a variable. For this reason, it can be said that the use of the stress intensity factor range $\Delta K_{II}$ including the size $\sqrt{area}$ of the inclusions as a variable shows a closer correlation with the life of the rolling bearing than the shearing stress $\tau$.

Therefore, when the stress intensity factor range $\Delta K_{II}$ is used instead of the shearing stress $\tau$ in the above Equation (5), the following Equation (6) is obtained.

[Equation 4]

$$ln\frac{1}{S} \approx \frac{N^e[\Delta K_{II} - \Delta K_{IIth}]^c V}{z_0^h} \quad \cdots \quad (6)$$

Here, $\Delta K_{IIth}$ is a stress intensity factor range (threshold stress intensity factor range) in which a crack does not propagate.

The above Equation (6) can be transformed into the following Equation (7), and can be further transformed into Equation (8).

[Equation 5]

$$ln\frac{1}{S} \approx \left[\frac{\Delta K_{II} - \Delta K_{IIth}}{\tau}\right]^c \frac{N^e \tau^c V}{z_0^h} \quad \cdots \quad (7)$$

$$N \approx \frac{1}{\left[\frac{\Delta K_{II} - \Delta K_{IIth}}{\tau}\right]^{c/e}} \left(\frac{z_0^h}{\tau^c V} ln\frac{1}{S}\right)^{1/e} \quad \cdots \quad (8)$$

Here, the following Equation (9) is obtained from the Lundberg-Palmgren life theory.

[Equation 6]

$$L_{10} \approx \left(\frac{z_0^h}{\tau^c V} ln\frac{1}{0.9}\right)^{1/e} \approx \left(\frac{C}{P}\right)^p \quad \cdots \quad (9)$$

Therefore, a life L of flaking originating from the inclusions is expressed by the following Equation (10).

[Equation 7]

$$L \approx \frac{1}{\left[\frac{\Delta K_{II} - \Delta K_{IIth}}{\tau}\right]^{c/e}} \left(\frac{C}{P}\right)^p \quad \cdots \quad (10)$$

Here, even when the stress intensity factor range $\Delta K_{II}$ is the same, a variation may occur in life. For this reason, a median of the life in a certain stress intensity factor range $\Delta K_{II}$ is denoted as $L_{mean}$. The life $L_{mean}$ is expressed by the following Equation (11).

[Equation 8]

$$L_{\text{mean}} = \frac{A}{\left[\dfrac{\Delta K_{\text{II}} - \Delta K_{\text{IIth}}}{\tau}\right]^{c/e}} \left(\frac{C}{P}\right)^{p} \quad \cdots \quad (11)$$

In this manner, in the method for predicting a life of a rolling bearing according to the present embodiment, the inclusion-originated flaking life of the rolling bearing can be predicted from the calculated stress intensity factor range $\Delta K_{\text{II}}$.

Incidentally, in the above Equations (5) and (9), c = 31/3, e = 10/9, p = 10/3e = 3 (in the case of a ball bearing), and these constants form the basis of the life formula specified by ISO or JIS. Among the constants, the constant e is a constant representing a variation in life value (Weibull slope). The constant e is based on the results of life tests of rolling bearings conducted by the SKF company of Sweden up until around 1940. Therefore, the constant e also includes the influence of the distribution of non-metallic inclusions.

Meanwhile, in the above Equation (11), the size $\sqrt{\text{area}}$ of the inclusions is taken into account as a variable of $\Delta K_{\text{II}}$. Namely, the Weibull slope of the life value when the size of the inclusions is constant is applied as the constant e used in the above Equation (11). As a result of the life tests using the drill holes described above, a Weibull slope of approximately 3 is obtained in this case. In this case, the value of p, in which e is treated as a variable, also becomes p = 10/3e = 1.1 (in the case of a ball bearing) different from the conventional value. However, from the viewpoint of industrial operation, it is convenient to obtain the conventional value of the $(C/P)^p$ term, and it is desirable that change points are included only in the correction term. Therefore, taking the case of a ball bearing as an example, Equation (11) can also be rewritten as the following Equation (11').

[Equation 9]

$$L_{\text{mean}} = \frac{A}{\left[\dfrac{\Delta K_{\text{II}} - \Delta K_{\text{IIth}}}{\tau}\right]^{c/e} \left(\dfrac{C}{P}\right)^{3-p}} \left(\frac{C}{P}\right)^{3} \quad \cdots \quad (11')$$

In addition, A used in the above Equation (11) is a material constant. In the case of SUJ2 of standard quality, the material constant A is considered to be in a range of $1 \times 10^{-9}$ to $10 \times 10^{-9}$ based on the relationship shown in FIG. 1. In addition, for a microcrack of 1 mm or less, the stress intensity factor range $\Delta K_{\text{IIth}}$ in which the crack does not propagate has defect size dependency; however, from FIG. 1, the stress intensity factor range $\Delta K_{\text{IIth}}$ can also be conveniently set to a constant (for example, approximately 6 MPa·m$^{1/2}$).

Hereinafter, a method for predicting a Weibull distribution of a life of a rolling bearing, which is manufactured using steel (for example, SUJ2) having a certain inclusion distribution, using the above Equation (11) will be described. For example, when x rolling bearings are manufactured, the size of a maximum size inclusion existing in the vicinity of a raceway surface is denoted as $\sqrt{\text{area}}$,x. A life $L_{\text{mean,x}}$ obtained by substituting the value into the above Equation (11) gives a minimum life among the x bearings. Namely, the life $L_{\text{mean,x}}$ can be considered as a life at which the cumulative failure probability is (100/x)%. Therefore, an arbitrary cumulative failure probability life $L_n$ is expressed by the following Equation (12) using a reliability factor $a_1$.

[Equation 10]

$$L_{\text{n}} = \left( \frac{\text{Reliability factor } a_1 \text{ of cumulative failure probability n\%}}{\text{Reliability factor } a_1 \text{ of cumulative failure probability } \left(\dfrac{100}{\text{x}}\right)\%} \right)^{\frac{1}{e}} \cdot L_{\text{mean,x}}$$

$$\cdots \quad (12)$$

Here, a reliability a1 at the cumulative failure probability n% is expressed by the following Equation (13).

[Equation 11]

Reliability factor $a_1$ of cumulative failure probability n%

$$= \left( \frac{\ln\left(1/(1-(\frac{n}{100}))\right)}{\ln\left(\frac{1}{0.9}\right)} \right)^{\frac{1}{e}} \qquad \text{In the case of } n > 10$$

$$= 0.95 \left( \frac{\ln\left(1/(1-(\frac{n}{100}))\right)}{\ln\left(\frac{1}{0.9}\right)} \right)^{\frac{2}{3}} + 0.05 \qquad \text{In the case of } n < 10$$

$$\cdots \quad (13)$$

In this manner, the arbitrary cumulative failure probability life $L_n$, namely, the Weibull distribution of the life can be predicted by using the above Equations (11) and (12). Namely, the Weibull distribution of the life of the rolling bearing can be predicted by multiplying the minimum life $L_{(100/x)}$ predicted by the method for predicting a life of a rolling bearing by the ratio of the reliability factor $a_1$ at the cumulative failure probability (100/x)% to the reliability factor $a_1$ at the arbitrary cumulative failure probability.

Here, as one example, the maximum inclusion size $\sqrt{area},x$ when the x bearings are manufactured can be estimated using extreme value statistics of inclusions. One example of a specific method of extreme value statistics will be shown below.

(Procedure 1): An inspection reference volume $V_0$ for the material used in the rolling bearing is determined. The maximum inclusion is detected among the inspection reference volume $V_0$, and a square root $\sqrt{area}_{max}$ of the projected area of the maximum inclusion is measured.

(Procedure 2): The above (procedure 1) is repeated n times, and the values of $\sqrt{area}_{max}$ are arranged in ascending order, and are denoted as $\sqrt{area}_{max,j}$ (j = 1 to n).

(Procedure 3): A standardized variable $y_j$ = -1n[-1n{j/(n + 1)}] is calculated, and a graph with $\sqrt{area}_{max,j}$ on the horizontal axis and $y_j$ on the vertical axis is created.

(Procedure 4): The values of a and b in $\sqrt{area}_{max}$=a·y + b are obtained by the least squares method.

(Procedure 5): Next, the total stress volume when x bearings are manufactured is obtained from a stress volume v of one bearing.

v is, for example, the volume on which a stress of 50% of the maximum shearing stress acts. Incidentally, the maximum shearing stress generation depth is denoted as z, the contact ellipse major axis is denoted as 2a, and a minimum diameter D of the inner ring raceway surface is denoted as D. In this case, v can be approximately obtained by v = 2z·2a·π·D or the like. The total stress volume V when the x rolling bearings are manufactured is V = (x * v).

(Procedure 6): From V and $V_0$, a recurrence period T and the standardized variable y are obtained by the following equations.

$$\text{Recurrence period } T = (V + V_0)/V_0$$

$$\text{Standardized variable } y = -\ln[-\ln\{(T-1)/T\}]$$

(Procedure 7): y obtained in the above (procedure 6) is substituted into the equation obtained in the above (procedure 4) to obtain $\sqrt{area}_{max}$.

The inclusion size $\sqrt{area}_{max}$ obtained as described above is considered to be the sizes of each of the maximum inclusions contained in the vicinities of the raceway surfaces (portions on which stress acts) of the x bearings. Accordingly, the minimum life for the x bearings, namely, the life $L_{mean,x}$ can be obtained from the above Equation (11).

In this manner, the value of the maximum size $\sqrt{area}_{max}$ of the inclusions existing in the vicinities of the rolling contact surfaces of an arbitrary number x of rolling bearings is applied as the size $\sqrt{area}$ of the inclusions used in calculating the stress intensity factor range $\Delta K_{II}$. Accordingly, the minimum life $L_{(100/x)}$ for the x rolling bearings can be predicted from the stress intensity factor range $\Delta K_{II}$ obtained based on the maximum size $\sqrt{area}_{max}$. Incidentally, as one example, as described above, the maximum size $\sqrt{area}_{max}$ can be estimated using an extreme value statistical distribution of inclusions in the steel from which the rolling bearings are manufactured. Furthermore, the maximum size $\sqrt{area}_{max}$ is the maximum size of the inclusions existing in the total stress volume of the x rolling bearings.

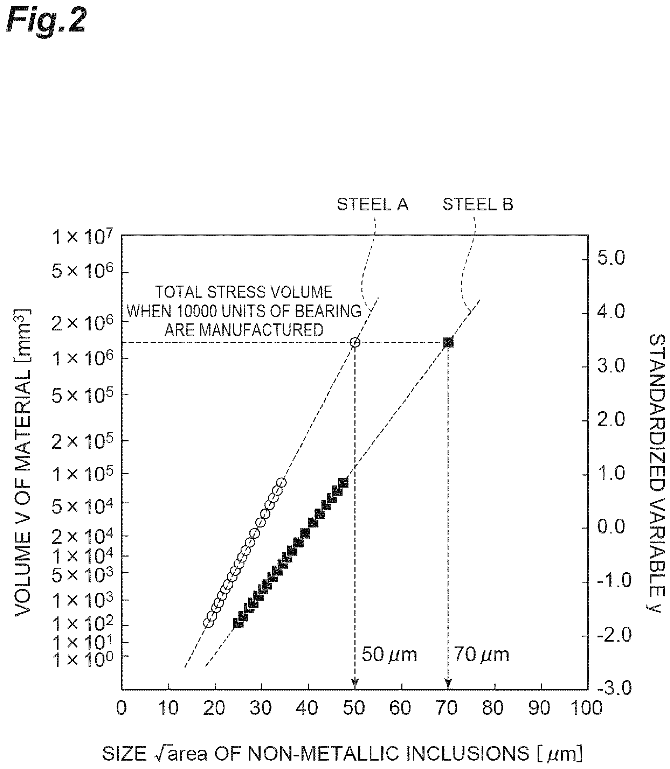

Hereinafter, a specific example of predicting a Weibull distribution of the life of a rolling bearing will be described. Here, a Weibull distribution of the life of a single-row deep groove ball bearing 6206 (hereinafter, simply referred to as the ball bearing 6206) was predicted when the single-row deep groove ball bearing 6206 was used under a loading ratio of P/C = 0.5 ($\tau$ = 957 MPa) and an inner ring rotation speed of 4000 min$^{-1}$. In addition, the ball bearings 6206 were manufactured using steel A and steel B having the extreme value statistical distribution of inclusions shown in FIG. 2. Incidentally, the extreme value statistical distribution of inclusions shown in FIG. 2 is a hypothetical distribution example.

The ball bearing 6206 is a ball bearing having an inner diameter of $\varphi$30 mm, an outer diameter of 62 mm, and a width of 16 mm. Here, the rolling element diameter is 9.525 mm, the number of rolling elements is 9, the rolling element pitch circle diameter (PCD) is 46.5 mm, and the radius of curvature of raceway grooves for both outer and inner rings is 52% of the rolling element diameter (namely, 9.525 x 0.52 = 4.953 mm).

A basic dynamic load rating C based on ISO/TS 16281 is calculated to be 19500 N. Under the operating condition with a loading ratio of P/C = 0.5 (namely, a dynamic equivalent load P = 0.5 × C = 9750 N) as described above, the contact ellipse diameter 2a = 4.702 mm, the maximum shearing stress generation depth z = 0.249 mm, and the minimum diameter D of the inner ring raceway surface = 36.975 mm are calculated at the contact surface between the rolling element and the inner ring where the maximum surface pressure occurs. Accordingly, the stress volume v of one bearing is calculated to be approximately 135 mm$^3$.

Therefore, for example, when 10000 units of the bearing are manufactured, the total stress volume V is 1350000 mm$^3$. Therefore, when a maximum size $\sqrt{area}_{10000}$ of inclusions contained in the volume V is estimated using FIG. 2, the maximum size $\sqrt{area}_{10000}$ is 50.0 $\mu$m for steel A and 70.0 $\mu$m for steel B. A contact surface pressure with a maximum value $P_{max}$ = 3.84 GPa is generated on the contact surface between the rolling element and the inner ring, and a shearing stress of $\tau$ = 957 MPa acts at the depth z.

When the $\sqrt{area}$ and $\tau$ values obtained above are substituted into the above Equation (3), $\Delta K_{II}$ is calculated to be 9.43 MPa·m$^{1/2}$ in the case of steel A and 10.68 MPa·m$^{1/2}$ in the case of steel B. Therefore, when this value is substituted into the above Equation (11), a minimum life $L_{mean,10000}$ for the 10000 bearings is obtained, which is 11.5 hours for steel A and 4.6 hours for steel B. Incidentally, in this specific example, A = 5 × 10$^{-9}$ and $\Delta K_{IIth}$ = 6.17.

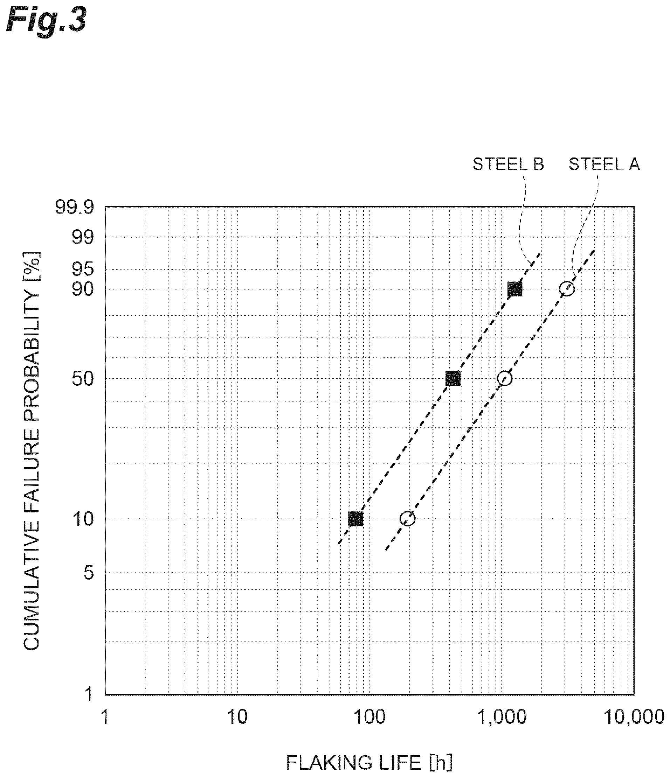

Table 1 below shows the results of calculating 10%, 50%, and 90% failure probability lives of the ball bearings 6206, which are manufactured from steel A and steel B, using the above Equation (12). When these data were plotted on Weibull probability paper, the results were as shown in FIG. 3, and the Weibull distribution of each life could be predicted.

[Table 1]

| Failure probability | Estimated life, h | |
|---|---|---|
| | Steel A | Steel B |
| 10% | 190 | 80 |
| 50% | 1,050 | 430 |
| 90% | 3,100 | 1,260 |

As described above, in the method for predicting a life of a rolling bearing, the inclusion-originated flaking life of the rolling bearing is predicted from the stress intensity factor range $\Delta K_{II}$. The stress intensity factor range $\Delta K_{II}$ is calculated taking into account the size $\sqrt{area}$ of the inclusions in addition to shearing stress. Namely, by using the stress intensity factor range $\Delta K_{II}$, the inclusion-originated flaking life of the rolling bearing can be predicted taking into account the influence of the inclusions. In this manner, in the life prediction method, the life of the rolling bearing can be predicted with high accuracy.

In the method for predicting a life of a rolling bearing, the value of the maximum size $\sqrt{area}_{max}$ of the inclusions existing in the vicinities of the rolling contact surfaces of the arbitrary number x of rolling bearings is applied as the size $\sqrt{area}$ of the inclusions. In this manner, in the life prediction method, the minimum life $L_{(100/x)}$ for the arbitrary number x of rolling bearings can be predicted by using the maximum size $\sqrt{area}_{max}$ of the inclusions.

In the method for predicting a life of a rolling bearing, the maximum size $\sqrt{area}_{max}$ of the inclusions existing in the vicinities of the rolling contact surfaces of the arbitrary number x of rolling bearings can be more appropriately estimated by using the extreme value statistical distribution.

In the method for predicting a Weibull distribution of a life of a rolling bearing, the Weibull distribution of the life of the rolling bearing is predicted by multiplying the minimum life $L_{(100/x)}$ predicted by the method for predicting a life of a rolling bearing described above by the ratio of the reliability factor $a_1$ at the cumulative failure probability (100/x)% to the reliability factor $a_1$ at the arbitrary cumulative failure probability. Incidentally, as described above, the minimum life $L_{(100/x)}$ predicted by the life prediction method takes into account the size (maximum size) of the inclusions. Accordingly, in the Weibull distribution prediction method, a more accurate Weibull distribution of the life of the rolling bearing can be obtained.

The embodiment of the present disclosure has been described above; however, the present disclosure is not limited to the embodiment. For example, each equation described above is merely an example, and a part of each equation may be modified depending on the rolling bearing to be predicted, so as to more appropriately represent the life or Weibull distribution of the rolling bearing. For example, the above Equation (3) has been shown as an equation for calculating the stress intensity factor range $\Delta K_{II}$; however, the stress intensity factor range $\Delta K_{II}$ may be obtained by an equation other than the above Equation (3) or a method.

**Claims**

1. A method for predicting a life of a rolling bearing when the rolling bearing is used under an arbitrary load condition,

   wherein a stress intensity factor range $\Delta K_{II}$ associated with passage of a rolling element under the load condition is calculated based on a size $\sqrt{area}$ of inclusions existing in the vicinity of a rolling contact surface of the rolling bearing, and
   an inclusion-originated flaking life of the rolling bearing is predicted from the stress intensity factor range $\Delta K_{II}$.

2. The method for predicting a life of a rolling bearing according to claim 1,

   wherein a value of a maximum size $\sqrt{area}_{max}$ of the inclusions existing in the vicinities of the rolling contact surfaces of an arbitrary number x of rolling bearings is applied as the size $\sqrt{area}$, and
   a minimum life $L_{(100/x)}$ for the x rolling bearings is predicted from the stress intensity factor range $\Delta K_{II}$ obtained based on the maximum size $\sqrt{area}_{max}$.

3. The method for predicting a life of a rolling bearing according to claim 2,

   wherein the maximum size $\sqrt{area}_{max}$ is estimated using an extreme value statistical distribution of inclusions in steel from which the rolling bearings are manufactured, and is a maximum size of the inclusions existing in a total stress volume of the x rolling bearings.

4. A method for predicting a Weibull distribution of a life of a rolling bearing,

   wherein a Weibull distribution of the life of the rolling bearing is predicted by multiplying the minimum life $L_{(100/x)}$ predicted by the method for predicting a life of a rolling bearing according to claim 2 or 3 by a ratio of a reliability factor $a_1$ at a cumulative failure probability (100/x)% to the reliability factor $a_1$ at an arbitrary cumulative failure probability.

## Fig.1

# Fig.2

# Fig.3

## INTERNATIONAL SEARCH REPORT

| International application No. |
|---|
| **PCT/JP2024/010822** |

| A. | CLASSIFICATION OF SUBJECT MATTER |
|---|---|

*G01M 13/04*(2019.01)i; *F16C 19/06*(2006.01)i; *F16C 19/10*(2006.01)i; *F16C 19/52*(2006.01)i
FI:   G01M13/04; F16C19/06; F16C19/10; F16C19/52

According to International Patent Classification (IPC) or to both national classification and IPC

| B. | FIELDS SEARCHED |
|---|---|

Minimum documentation searched (classification system followed by classification symbols)

F16C19/06; F16C19/10; F16C19/52; G01M13/04; G01N3/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2017-219469 A (NSK LTD.) 14 December 2017 (2017-12-14) | 1 |
|   | paragraphs [0029]-[0048], [0078], fig. 1 | |
| A | paragraphs [0029]-[0048], [0078], fig. 1 | 2-4 |
| A | JP 2016-509670 A (SIEMENS CORPORATION) 31 March 2016 (2016-03-31) | 1-4 |
| A | CN 106120914 A (DONG, Chaochao) 16 November 2016 (2016-11-16) | 1-4 |
| A | 藤井幸生, 前田喜久男, 大塚昭夫, 高硬度材料のモードII疲労き裂進展特性を求めるための新試験法, 材料, vol. 50, no. 10, 15 October 2001, pages 1108-1113, (FUJII, Yukio, MAEDA, Kikuo, OTSUKA, Akio, A New Test Method for Mode II Fatigue Crack Growth in Hard Materials, J. Soc. Mat. Sci., Japan) | 1-4 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/010822**

| Patent document cited in search report | | | Publication date (day/month/year) | Patent family member(s) | | | Publication date (day/month/year) |
|---|---|---|---|---|---|---|---|
| JP | 2017-219469 | A | 14 December 2017 | (Family: none) | | | |
| JP | 2016-509670 | A | 31 March 2016 | US | 2014/0229149 | A1 | |
| | | | | WO | 2014/107303 | A1 | |
| | | | | EP | 2941640 | A1 | |
| | | | | CN | 105051527 | A | |
| | | | | KR | 10-2015-0103021 | A | |
| CN | 106120914 | A | 16 November 2016 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5908356 B

**Non-patent literature cited in the description**

- **HASHIMOTO et al.** Influence of Micro-defect Size on Flaking Strength of Rolling Bearings (Part 1). *Transactions of the Japan Society of Mechanical Engineers*, 2017, vol. 83 (852)

- **HASHIMOTO et al.** Influence of Micro-defect Size on Flaking Strength of Rolling Bearings (Part 2). *Transactions of the Japan Society of Mechanical Engineers*, 2017, vol. 83, 852